# EUROPEAN PATENT SPECIFICATION

(11) **EP 2 175 965 B1**
(45) Date of publication and mention of the grant of the patent: **29.08.2012**
(21) Application number: 08790084.1
(22) Date of filing: 29.07.2008
(51) Int. Cl.: B01D 53/04, B01D 53/26, H01F 27/14, G01N 5/02

(54) **IMPROVED DRIER FOR DEHUMIDIFYING THE AIR INTENDED FOR OIL EXPANSION TANK USED IN ELECTRICAL EQUIPMENTS**
VERBESSERTER TROCKNER ZUR LUCHTENTFEUCHTUNG FÜR ÖLAUSDEHNUNGSGEFÄSS FÜR ELEKTRISCHE EINRICHTUNGEN
SÉCHOIR PERFECTIONNÉ POUR LA DÉSHUMIDIFICATION DE L'AIR DESTINÉ À UN RÉSERVOIR D'EXPANSION D'HUILE UTILISÉ DANS DES ÉQUIPEMENTS ÉLECTRIQUES

(30) Priority: 07.08.2007 IT VI20070222
(43) Date of publication of application: 21.04.2010
(73) Proprietor: ABB Technology AG, 8050 Zürich (CH)
(72) Inventor: DAL LAGO, Silvio, 36054 Montebello Vicentino Vicenza (IT)
(74) Representative: Iannone, Carlo Luigi
(86) International application number: PCT/IT2008/000513
(87) International publication number: WO 2009/019733

(56) References cited:
- EP-A- 1 980 312
- WO-A-2004/043574
- WO-A-2004/088679
- WO-A-2005/055255
- AU-B2- 539 707
- JP-A- 57 153 721
- JP-A- 59 179 129
- US-A1- 2003 089 238

## Description

This invention relates to an improved dryer for dehumidifying the air intended for oil expansion tanks used in electrical equipments, particularly oil isolated such as, for example, power transformers, on load switches and so forth.

It is known that a power electrical equipment containing insulation oil usually includes an expansion tank having the function to compensate the inevitable volume variations of the oil inside the transformer caused by the sudden changes of temperature.

Such an expansion tank of the oil is supplied with air previously treated in a special dryer in order to eliminate or drastically reduce the moisture.

This is because the air supplied to an expansion tank of the oil even with a minimum amount of residual moisture would result in the negative aspect of reducing the breaking tension of the insulation oil. In the essential and main aspects, a drier of the known type includes a dehumidification container, which has an inlet for the air to be dehumidified and an outlet for the dehumidified air, and absorption means, contained in the dehumidification container, suitable for dehumidifying the air coming from the outside.

Generally, the absorption means consist of a plurality of granules or salts thermally regenerable. The dryer also includes heating means, usually a resistor element, positioned inside the dehumidification container and responsible for the thermal regeneration of the absorption means.

In addition, the dryer includes detection means of the moisture degree of the dehumidified air, operatively connected with the heating means. Typically, such detection means include a moisture sensor placed outside the dehumidification container, preferably in the vicinity of the exit aperture of the dehumidified air, in any case being able to be positioned in any other position along the path of dry air.

The moisture sensor detects the value of residual moisture in the dry air and causes the activation of the heating means if such a value exceeds a maximum allowable value: in fact, this means that the absorption means have lost or are losing their absorbent capacity and must be regenerated.

WO 2005/055255 discloses a dryer for dehumidifying air by adsorption from oil-insulated transformers comprising detection means which are operatively connected to heating means for regenerating the adsorption means. The detection means are suitable to detect the saturation state of the adsorption means and comprise a moisture sensor and a pressure sensor.

However, in the known dryers the detection of the moisture content of the dry air does not always ensure, ultimately, the complete regeneration of the absorption means because sometimes the air entering the dehumidification container follows preferential routes, this distorting the detection itself.

In such situations, the moisture sensor sets going with high frequency the resistor element responsible to regenerate the absorption means, with the consequence that the continuing cycles of switching on and switching off cause unavoidable problems of reliability of the same resistor element.

The present invention aims to solve this problem of the known technique.

In particular, the primary purpose of the invention is to provide an improved dryer for dehumidifying the air intended to expansion tanks of the oil used in electrical equipments more reliable and efficient than the equivalent dryers of the known type.

It a second purpose of the present invention monitoring the status of dehumidification of the absorption means of the aforesaid dryer more effectively than the known art.

A third purpose of the attached invention is to get ready an improved dryer for dehumidifying air intended to expansion tanks of simple construction.

The aforesaid purposes are achieved through an improved dryer for dehumidifying the air intended for oil expansion tanks used in electrical equipments as the attached claim 1, which they refer for the sake of brevity.

Other technical features of detail of the improved dryer of the invention are set forth in the dependent claims.

Advantageously, the improved dryer of the invention allows to perform accurate measures of the level of dehumidification of the absorption means and, indirectly, of the degree of moisture of the air just dehumidified while keeping in any case a high level of functional efficiency of the involved members, in particular the heating means.

Still advantageously, the improved dryer object of the present invention is of simple construction, comparable to that of the dryers of the known art.

The aforesaid purposes and advantages will appear better evident with the description of a preferred embodiment of the invention given by illustrative but not limiting way with the aid of the enclosed drawing which shows in simplified longitudinal section the dryer of which protection is hereby required.

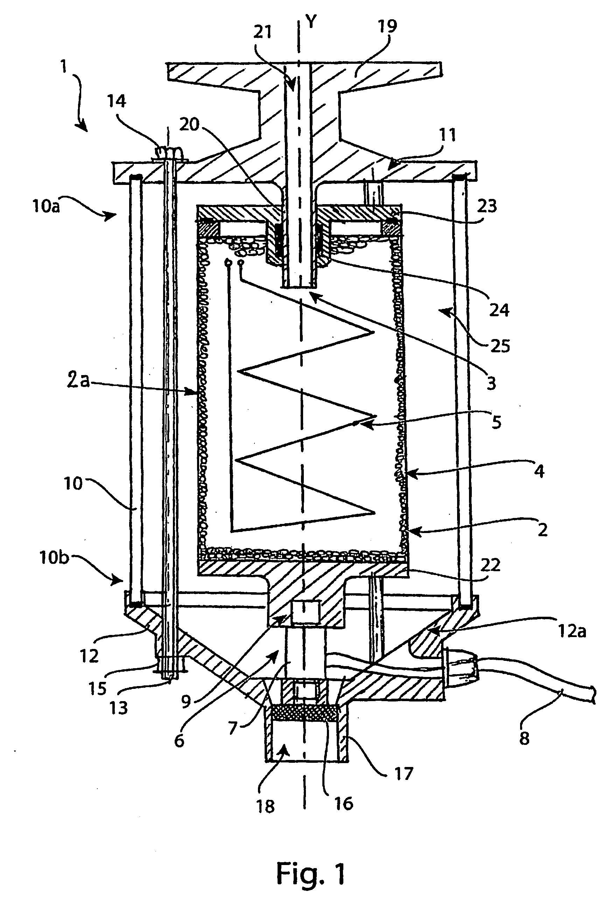

The improved dryer for dehumidifying the air intended for oil expansion tanks used in electrical equipments is shown in figure 1 globally numbered with 1.

It is observed that it includes:
- a dehumidification container 2 which present a plurality of inlet micro apertures, not visible, for the air to be dehumidified and an outlet 3 for the dehumidified air;
- absorption means, as a whole marked with 4, -contained in the dehumidification container 2 and suitable for dehumidifying the air coming from the outside;
- heating means, as a whole reported with 5, positioned inside the dehumidification container 2, intended to regenerate the absorption means 4;
- detection means, overall marked with 6, operatively connected with the heating means 5, suitable for determining the saturation state of the absorption means 4.

According to the invention, the detection means 6 include a transducer 7, coupled to the dehumidification container 2, which directly measure the degree of dehumidification of the absorption means 4.

The transducer 7 includes an electronic load cell of the compression type, which converts an applied force in a variation of the electrical resistance.

The load cell is electrically connected to the supply network of electricity through electric terminals 8. It is understood that in other constructive solutions of the invention, not shown, the detection means may include a transducer of different type with respect to the one just mentioned.

In addition, - other embodiments, not shown in the drawings that follow, will provide for the detecting means a load cell of the traction type, which converts a stretch in a variation of the electrical resistance.

The transducer 7 is coupled to the dehumidification container 2 by fastening means, as a whole numbered with 9 and of the type in itself known, such as screws, bolts, rivets, pins, dowels and the like.

The improved dryer 1 also includes a protection casing 10, in this case a glass cylinder, which surrounds the dehumidification container 2.

The protection casing 10 is provided at a first ends 10a with a closing flange 11 and at a second end 10b with a collecting sump 12 which receives the condensate that, during use, comes out from the inlet micro apertures of the dehumidification container 2 to convey it outside.

The closing flange 11 and the collection sump 12 are connected one each other through linear rods 13, each of which blocked at the ends with nuts 14, 15.

By way of preference, the improved dryer 1 comprises a filtering body 16, produced for example in metallic material and arranged at the second end 10b of the protection casing 10.

The air to be dehumidified passes through the filtering body 16 before entering the dehumidification container 2.

In particular, the collection sump 12 presents an inner wall 12a inclined and converging toward the centre so that it defines an essentially triangular profile in cross section.

The collection sump 12 is also provided with a projecting spout 17 which has a central opening 18 suitable for the exhaust at the outside of the condensate and into which the filtering body 16 is inserted which, so, is crossed in one direction by the air to be dehumidified and in the opposite direction from the condensate to drain off, produced during the functioning in the dehumidification container 2.

According to the preferred embodiment here described of the invention, the inlets of the air to be dehumidified are made on the side wall 2a of the dehumidification container 2 and where they are uniformly distributed.

As figure 1 shows, the dehumidification container 2 and the protection casing 10 are coaxial one each other identifying the same longitudinal axis of symmetry Y.

Preferably but not necessarily, the closing flange 11 includes a main body 19, suitable to be coupled with the expansion tank, and a central shank 20, projecting from the main body 19 and partly inserted into the dehumidification container 2.

Owing to this constructive form, the outlet 3 of the dehumidified air consists of a through axial hole 21 which affects both the main body 19 and the central shank 20 of the closing flange 11.

The through axial hole 21 of the closing flange 11 is coaxial to the longitudinal axis Y.

As shown in figure 1, the dehumidification container 2 is provided on one side with a shaped bottom 22 to the transducer 7 is coupled and on the opposite side with a sealing plug 23, sliding on the central shank 20 of the closing flange 11 along the longitudinal axis Y.

Thus, the dehumidification container 2 is free to slide along the longitudinal axis Y, performing movements of small entity which allow the transducer 7 to perform the function for which is nominally intended to.

The improved dryer includes, therefore, seal means, such as for example an annular seal 24, interposed between the sealing plug 23 and the central shank 20 of the closing flange 11.

The absorption means 4 are of the type in itself known to the person skilled in the art, such as salt granules capable to absorb the air moisture and thermally regenerable.

In turn, the heating means 5 are of the type in itself known to the technician of the field, being represented by a generic resistor.

In use, the air to be dehumidified enters the central opening 18 of the collection sump 12 and, after passing through the filtering body 16, occupies the interspace 25 defined between the dehumidification container 2 and the protection casing 10.

Frome here the air to be dehumidified passes through the inlet micro apertures and enters inside the dehumidification container 2 where it is dehumidified by the absorption means 4 before being conveyed outside passing through the outlet 3.

The transducer, 7, weighing the dehumidification container 2, detects the degree of dehumidification of the absorption means 4 and, in essence, the moisture degree of the dehumidified air.

The detection by the transducer 7 of a value exceeding a predetermined maximum threshold means that the absorption means 4 have reached the set saturation levels and, therefore, the heating means 5 are activated in order to regenerate the former state of the absorption means 4.

The condensate which is inevitably produced in this stage comes out from inlet micro apertures of the side wall 2a of the dehumidification container 2 and, by gravity, reaches the collection sump 12 from where it's conveyed outside through the central opening 18. By virtue of the above, it is understood, therefore, that the improved dryer for dehumidifying the air intended for oil expansion tanks used in electrical equipments according to the invention reaches the purposes and realizes the benefits previously mentioned.

In execution, changes can be made to the improved dryer of the invention consisting, for example, in a dehumidifying container which presents only one inlet of the air to be dehumidified.

In addition, other embodiments of the invention can subsists where the inlets of the air to be dehumidified are arranged in a position different form the one previously described, which does not affect the advantage brought by this patent. Moreover, in other embodiments the dehumidification container may present more than one outlet of the dehumidified air.

## Claims

1. Improved dryer (1) for dehumidifying the air intended for oil expansion tanks used in electrical equipments including:
- a dehumidification container (2) having at least an inlet for said air to be dehumidified and at least an outlet (3) for said dehumidified air;
- absorption meant (4) ; contained in said dehumidification container (2), suitable to dehumidify said air coming from the outside;
- heating means (5), positioned within said dehumidification container (2), suitable to regenerate said absorption means (4);
- detection means (6) , operatively connected with said heating means (5), suitable to determine the saturation state of said absorption means (4), wherein said detection means (6) include at least one transducer (7), coupled with said dehumidification container (2) and suitable to measure the degree of dehumidification of said absorption means (4), **characterized in that** said transducer (7) includes an electronic load cell, of the traction or of the compression type, which is able to convert a stretch or an applied force in a variation of electrical resistance, said load cell being electrically connected to the supply network of electricity and being coupled with said dehumidification container (2) by fastening means (9).

2. Dryer (1) as claim 1) **characterized in that** it comprises a protection casing (10) which surrounds said dehumidification container (2), provided at a first end (10a) with a closing flange (11) and at a second end (10b) with a collection sump (12) suitable for receiving the condensate coming from said inlet of said dehumidification container (2) to convey it outside.

3. Dryer (1) as claim 2) **characterized in that** it includes a filtering body (16), arranged at said second end (10b) of the protection casing (10), through which the air to be dehumidified passes before entering in the dehumidification container (2).

4. Dryer (1) as claim 3) **characterized in that** said collection sump (12) is provided with a projecting spout (17) which has a central opening (18), suitable for the exhaust of said condensate, in which said filtering body (16) is inserted.

5. Dryer (1) as claim 1) **characterized in that** said dehumidification container (2) presents on the side wall (2a) a series of inlet, which are uniformly distributed on said side wall (2a), through which said air to be dehumidified passes.

6. Dryer (1) as claim 2) **characterized in that** said dehumidification container (2) and said protection casing (10) are coaxial one each other identifying the same longitudinal axis of symmetry (Y).

7. Dryer (1) as claim 2) **characterized in that** said closing flange (11) includes a main body (19), suitable to be coupled with said expansion tank, and a central shank (20), projecting from said main body (19) and at least partly inserted into said dehumidification container (2).

8. Dryer (1) as claim 7) **characterized in that** said outlet (3) of said dehumidified air consists of a through axial hole (21) which affects said main body (19) and said central shank (20) of said closing flange (11) and which is coaxial to said longitudinal axis (Y).

9. Dryer (1) as claim 7) **characterized in that** said dehumidification container (2) is provided on one side with a shaped bottom (22) to which said transducer (7) is coupled and on the opposite side with a sealing plug (23) which slides, through sealing means (24), on said central shank (20) of said closing flange (11) and along said longitudinal axis (Y).

## Patentansprüche

1. Verbesserter Trockner (1) zum Entfeuchten der Luft, die für Ölexpansionstanks bestimmt ist, die in elektrischen Anlagen verwendet werden, enthaltend:
- einen Entfeuchtungsbehälter (2) mit mindestens einem Einlass für die zu entfeuchtende Luft und mindestens einem Auslass (3) für die entfeuchtete Luft;
- in dem Entfeuchtungsbehälter (2) enthaltene Absorptionsmittel (4), die geeignet sind, um die von der Außenseite kommende Luft zu entfeuchten;
- innerhalb des Entfeuchtungsbehälters (2) positionierte Erwärmungsmittel (5), die geeignet sind, um die Absorptionsmittel (4) zu regenerieren;
- betriebsmäßig mit den Heizmitteln (5) verbundene Detektionsmittel (6), die geeignet sind, um den Sättigungszustand der Absorptionsmittel (4) zu bestimmen,
wobei die Detektionsmittel (6) mindestens einen Messwandler (7) enthalten, der mit dem Entfeuchtungsbehälter (2) verbunden ist und geeignet ist, um das Ausmaß der Entfeuchtung der Absorptionsmittel (4) zu messen, **dadurch gekennzeichnet, dass** der Messwandler (7) eine elektronische Messzelle des Zugoder des Drucktyps enthält, die in der Lage ist, um eine Dehnung oder eine angelegte Kraft in eine Variation eines elektrischen Widerstands umzuwandeln, wobei die Messzelle mit dem elektrischen Versorgungsnetzwerk elektrisch verbunden ist und durch Befestigungsmittel (9) mit dem Entfeuchtungsbehälter (2) gekoppelt ist.

2. Trockner (1) gemäß Anspruch 1, **dadurch gekennzeichnet, dass** er eine Schutzhülle (10) aufweist, die den Entfeuchtungsbehälter (2) umgibt, die an einem ersten Ende (10a) mit einem Verschlussflansch (11) und an einem zweiten Ende (10b) mit einem Sammelbehälter (12) versehen ist, der geeignet ist, um das von dem Einlass des Entfeuchtungsbehälters (2) kommende Kondensat aufzunehmen und nach außen zu befördern.

3. Trockner (1) gemäß Anspruch 2, **dadurch gekennzeichnet, dass** es einen Filterkörper (16) enthält, der an dem zweiten Ende (10b) der Schutzhülle (10) angeordnet ist, durch den die zu entfeuchtende Luft hindurchtritt, bevor sie in den Entfeuchtungsbehälter (2) eintritt.

4. Trockner (1) gemäß Anspruch 3, **dadurch gekennzeichnet, dass** der Sammelbehälter (12) mit einer Ausladung (17) versehen ist, die eine zentrale Öffnung (18) aufweist, die geeignet ist für den Abdampf des Kondensats, in den der Filterkörper (16) eingesetzt wird.

5. Trockner (1) gemäß Anspruch 1, **dadurch gekennzeichnet, dass** der Entfeuchtungsbehälter (2) auf der Seitenwand (2a) eine Reihe von Einlässen bietet, die einheitlich auf der Seitenwand (2a) verteilt sind, durch die die zu entfeuchtende Luft hindurchtritt.

6. Trockner (1) gemäß Anspruch 2, **dadurch gekennzeichnet, dass** der Entfeuchtungsbehälter (2) und die Schutzhülle (10) koaxial zueinander, die selbe Längsachse der Symmetrie (Y) definierend angeordnet sind.

7. Trockner (1) gemäß Anspruch 2, **dadurch gekennzeichnet, dass** der Abschlussflansch (11) einen Hauptkörper (19) enthält, der geeignet ist, um mit dem Expansionstank verbunden zu werden, und ein Zentralkolben (20), der von dem Hauptkörper (19) hervorsteht und mindestens teilweise in den Entfeuchtungsbehälter (2) eingesetzt ist.

8. Trockner (1) gemäß Anspruch 7, **dadurch gekennzeichnet, dass** der Auslass (3) der entfeuchteten Luft aus einem axialen Durchgangsloch (21) besteht, das den Hauptkörper (19) und den Zentralkolben (20) des Abschlussflansches (11) beeinflusst und das koaxial zu der Längsachse (Y) ist.

9. Trockner (1) gemäß Anspruch 7, **dadurch gekennzeichnet, dass** der Entfeuchtungsbehälter (2) auf einer Seite mit einer geformten Unterseite (22) versehen ist, mit der der Messwandler (7) verbunden ist und auf der gegenüberliegenden Seite mit einem Verschlussstopfen (23), der durch Abdichtungsmittel (24) auf dem Zentralkolben (20) des Abschlussflansches (11) gleitet und entlang der Längsachse (Y).

## Revendications

1. Séchoir amélioré (1) pour déshumidifier l'air prévu pour des réservoirs d'expansion d'huile utilisés dans des équipements électriques, comprenant :
- un récipient de déshumidification (2) comportant au moins un orifice d'entrée pour ledit air devant être déshumidifié et au moins un orifice de sortie (3) pour ledit air déshumidifié ;
- des moyens d'absorption (4), contenus dans ledit réservoir de déshumidification (2), appropriés pour déshumidifier ledit air venant de l'extérieur ;
- des moyens de chauffage (5), positionnés à l'intérieur dudit récipient de déshumidification (2), appropriés pour régénérer lesdits moyens d'absorption (4) ;
- des moyens de détection (6) reliés de façon fonctionnelle auxdits moyens de chauffage (5), appropriés pour déterminer l'état de saturation desdits moyens d'absorption (4),
dans lequel lesdits moyens de détection (6) comprennent au moins un transducteur (7), couplé audit récipient de déshumidification (2), et appropriés pour mesurer le degré de déshumidification desdits moyens d'absorption (4), **caractérisé en ce que** ledit transducteur (7) comprend une cellule de charge électronique, du type à traction ou à compression, qui est susceptible de convertir un étirement ou une force appliquée en une variation de résistance électrique, ladite cellule de charge étant électriquement connectée au réseau d'alimentation en électricité et étant couplée audit récipient de déshumidification (2) par des moyens de fixation (9).

2. Séchoir (1) selon la revendication 1, **caractérisé en ce qu'**il comprend une enceinte de protection (10) qui entoure ledit récipient de déshumidification (2), munie à une première extrémité (10a) d'une bride de fermeture (11), et, à une deuxième extrémité (10b), d'une cuve de collecte (12) appropriée pour recevoir le condensat venant dudit orifice d'entrée dudit récipient de déshumidification (2) pour convoyer celui-ci vers l'extérieur.

3. Séchoir (1) selon la revendication 2, **caractérisé en ce qu'**il comprend un corps filtrant (16), disposé à ladite deuxième extrémité (10b) de l'enceinte de protection (10), à travers lequel passe l'air devant être déshumidifié avant d'entrer dans le récipient de déshumidification (2).

4. Séchoir (1) selon la revendication 3, **caractérisé en ce que** ladite cuve de collecte (12) est munie d'un bec saillant (17) qui comporte une ouverture centrale, appropriée pour l'évacuation dudit condensat, dans laquelle est inséré ledit corps filtrant (16).

5. Séchoir (1) selon la revendication 1, **caractérisé en ce que** ledit récipient de déshumidification (2) présente sur la paroi latérale (2a) une série d'orifices d'entrée, qui sont uniformément répartis sur ladite paroi latérale (2a), à travers lesquels passe ledit air devant être déshumidifié.

6. Séchoir (1) selon la revendication 2, **caractérisé en ce que** ledit récipient de déshumidification (2) et ladite enceinte de protection (10) sont coaxiaux l'un par rapport à l'autre, identifiant le même axe de symétrie longitudinal (Y).

7. Séchoir (1) selon la revendication 2, **caractérisé en ce que** ladite bride de fermeture (11) comprend un corps principal (19), approprié pour être couplé audit réservoir d'expansion, et une tige centrale (20), faisant saillie à partir dudit corps principal (19) et au moins partiellement insérée dans ledit récipient de déshumidification (2).

8. Séchoir (1) selon la revendication 7, **caractérisé en ce que** ledit orifice de sortie (3) dudit air déshumidifié est constitué par un trou traversant axial (21) qui affecte ledit corps principal (19) et ladite tige centrale (20) de ladite bride de fermeture (11), et qui est coaxial audit axe longitudinal (Y).

9. Séchoir (1) selon la revendication 7, **caractérisé en ce que** ledit récipient de déshumidification (2) est muni sur un côté d'un fond ayant une certaine forme (22) auquel est couplé ledit transducteur (7), et, sur le côté opposé, d'un bouchon de scellement étanche (23), qui coulisse, à travers des moyens d'étanchéité (24), sur ladite tige centrale (20) de ladite bride de fermeture (11) et le long dudit axe longitudinal (Y).
